Europäisches Patentamt

European Patent Office

Office européen des brevets

(11) Publication number: **0 227 188**
**A1**

(12) **EUROPEAN PATENT APPLICATION**

(21) Application number: 86202301.7

(22) Date of filing: 17.12.86

(51) Int. Cl.⁴: **A01F 25/14 , A01D 90/00**

(30) Priority: 19.12.85 NL 8503498

(43) Date of publication of application:
01.07.87 Bulletin 87/27

(84) Designated Contracting States:
DE FR GB

(71) Applicant: **C. van der Lely N.V.**
**Weverskade 10 P.O. Box 26**
**NL-3155 ZG Maasland(NL)**

(72) Inventor: **Van der Lely, Cornelis**
**7, Brüschenrain**
**ZUG(CH)**

(74) Representative: **Mulder, Herman et al**
**Octrooibureau Van der Lely N.V. Weverskade**
**10 P.O. Box 26**
**NL-3155 ZG Maasland(NL)**

(54) **A self-loading wagon.**

(57) The invention relates to a self-loading wagon
with a loading space (5) for crop picked up from the
ground. The crop remains in the airtight closed load-
ing space and is submitted to ensilaging. The load-
ing space is detachably connected to the wagon
frame (1) and can individually be supported on the
ground so as to be readily loaded on the wagon
frame (1) again so that more than one loading space
(5) can be deployed. A dosing device (6) is attached
to the wagon frame and is used to feed ensilaged
crop from the loading space directly to the cattle.

FIG. 1

## A SELF-LOADING WAGON

The invention concerns a self-loading wagon comprising a pick-up member and at least one feeding device, as well as a loading space.

Loading wagons of this prior art type are used inter alia for loading green forage from the field and subsequent conveyance thereof to a silo. The loading wagon unloads the green forage contained in the loading space into the silo; the unloaded green forage is distributed uniformly into the silo and compacted. When the silo has been filled to capacity, the forage is covered up by means of a cover which to the best possible extent prevents oxygen from reaching said forage.

The stored green forage is used for feeding cattle during the winter season, the cover then being partially removed, whereafter the quantity of forage required at that moment is taken from the silo, usually by means of a silage cutter. Then the blocks cut out by the silage cutter are conveyed to the stable and, after having been reduced to smaller pieces by hand or by means of a separate distributing device, are offered to the cattle.

This method is very complicated and consequently labour-intensive.

It is an object of the invention as much as possible to reduce the amount of labour from the moment the green forage is picked-up from the field up to and inclusive that of offering same to the cattle.

According to the invention, the self-loading wagon is of such a structure that the crop can be ensilaged in the loading space.

Thus it can be accomplished that the crop or green forage picked-up by the loading wagon and contained in the loading space remains in the loading space and is fed directly to the cattle in preserved condition.

During the ensilage period of the crop contained in the loading space, the loading space, which is detachable from the rest of the loading wagon, is arranged separately, as are also other loading spaces which, coupled to the rest of the loading wagon, have been filled in a similar way.

When the preserved crop must be fed to the cattle, the detached loading spaces are coupled again one by one to the rest of the loading wagon, driven into the stable, whereafter the preserved fodder, possibly by using an additional dosing device to be coupled to the loading wagon, is directly delivered in front of the cattle.

The invention will now be described in greater detail, by way of example, with reference to the accompanying drawings, in which:

Figure 1 is a side view of a first embodiment of a self-loading wagon in accordance with the invention;

Figure 2 is a side view of the wagon of Figure 1 in a position wherein the loading space can be coupled or detached;

Figure 3 shows, to an enlarged scale, part of the wagon of Figure 2;

Figure 4 is a side view of a second embodiment of a self-loading wagon according to the invention:

Figure 5 is a side view of the wagon of Figure 4, in which the feeding device has been moved;

Figure 6 is a side view, to an enlarged scale, of part of the wagon of Figures 4 and 5;

Figure 7 is a side view of the wagon shown in Figures 4 to 6, the loading space having been detached;

Figure 8 is a rear view of the wagon shown in Figures 4 to 7.

In accordance with a first embodiment, the self-loading wagon has a frame 1 which is supported by sets of ground wheels 2 arranged at both sides of the frame 1. Near the front of the self-loading wagon there is arranged a pick-up member 3 which in a manner known per se picks-up the crop in a direction indicated by the arrow B and subsequently, in combination with a known per se feeding device 4, the crop is pushed in an obliquely upwardly, rearwardly direction into a loading space 5. At its rear, the loading space 5 is provided with a dosing device 6 which in this case can be detached from the rest of the loading wagon. In 10 the region before the front side of the loading space 5, the frame 1 is extended in the shape of carrier beams 7 located at the sides and supporting the feeding device 4 and its cover. At their foremost ends, the carrier beams 7 are interconnected by a transverse element 8. Half-way its 15 length, the transverse element 8 is provided with a draw bar 9 by means of welding, which draw bar extends in a forward direction and at its front side is provided with a draw hook, by means of which the loading wagon is connectable to a tractor 10 for moving same.

The crop picked-up by the pick-up member 3 is stowed in a known per se manner by the feeding device 4, fed into a feeding channel 11 in which rows of knives 12 may be arranged transversely, which knives, if so desired, cut the crop during the feed forward into pieces of a predetermined length. The crop fed-forward via the feeding channel 11 enters the loading space 5 via a feeding aperture 13 thereof. The feeding aperture 13 of the loading space 5 extends across the overall width of the loading space 5 and in height over a dimension further to be defined hereinafter.

As regards the notion "loading space" denoted by reference numeral 5, it should be noted that in the subsequent description it may define a floor or bottom wall, a top wall, a front and a rear wall as well as side walls of a space enclosed by said walls (so as a three-dimensional construction), but may denote also the enclosed space itself, as will be apparent from the context.

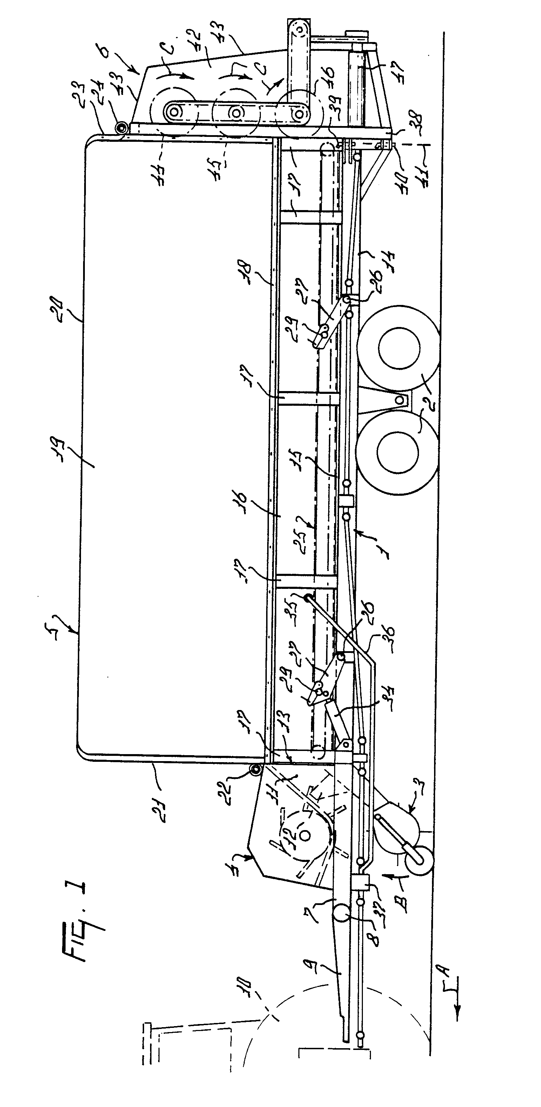

The frame 1 supporting the loading space 5 is assembled substantially from two parallel metal carrier beams 14 which at their foremost ends in the region of the rear side of the feeding device 4 are rigidly interconnected by a transverse beam, not sown in Figure 1. Seen in side view as shown in Figure 1, the carrier beams 14 extend over the overall length of the loading space 5. But for at their front ends the carrier beams 14 are not interconnected, so that the frame 1 is in the shape of a horizontal U which is open to the rear.

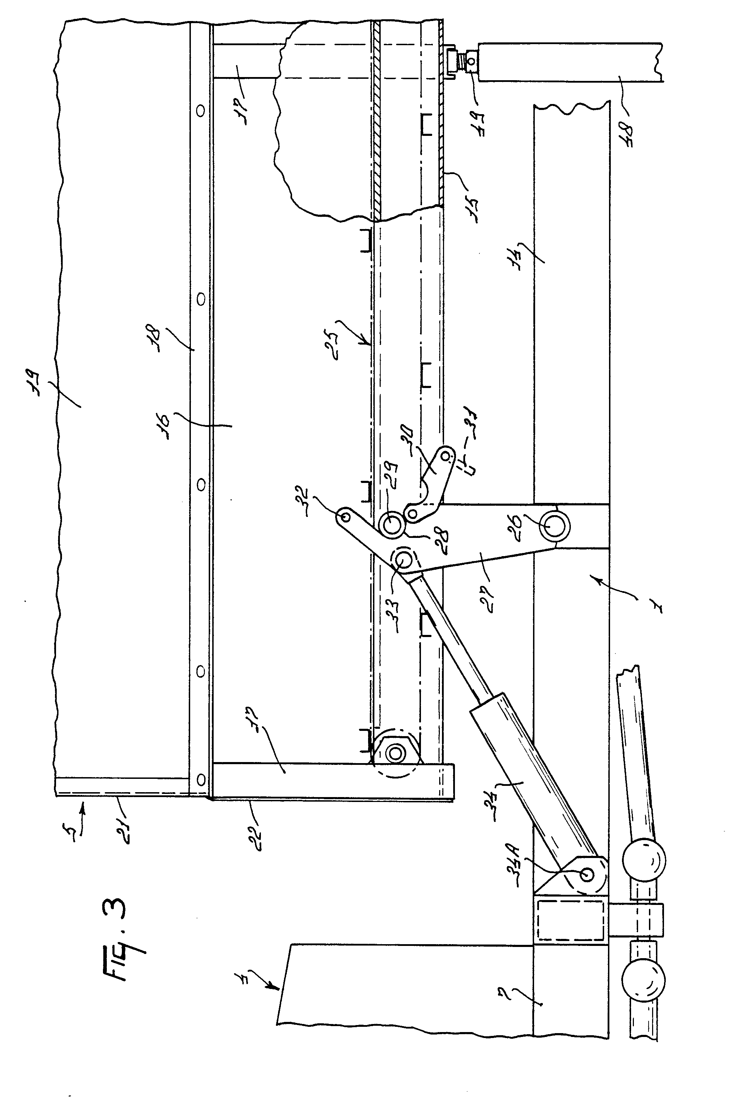

The loading space 5 is positioned on the frame 1 and can be removed bodily therefrom. The loading space includes a fully closed metal floor plate 15 (Figure 3) which at its two longitudinal sides merges in an airtight manner into upwardly directed metal side wall portions 16, which also extend over the overall length of the loading space 5; seen in side view, the height of the side wall portions 16 approximately corresponds to that of the cover plates of the feeding device 4. The floor plate 15 and the side wall portions 16 are made rigid by means of a plurality of transverse ribs 17 which extend at the outer side of the side wall portions and at the bottom side of the floor plate 15 and, near their top ends, are interconnected by longitudinal ribs 18. Consequently, the floor plate 15 and the side wall portions 16 made rigid by the ribs 17 and 18 constitute a metal bottom shell of the loading space 5.

In the upward direction, the side wall portions 16 extend in the form of side wall portions 19 consisting of airtight, flexible walls which, for example, are made of reinforced synthetic resin material. In the region of the longitudinal ribs 18, the wall portions 19 are connected in an airtight manner to said metal bottom shell.

In the region of their upper edges, the flexible wall portions 19 extend in the shape of a flexible roof wall 20. Alternatively, the side wall portions 19 and the roof wall may be made from metal sheet material.

At its front side, the loading space 5 is closed from the roof wall 20 up to the front sides of the longitudinal ribs 18 by means of a flexible front wall 21 made of synthetic resin material and connected in an airtight manner to the roof wall 20 and to the side wall portions 19. At the lower side of the flexible front wall 21 there is positioned a further front wall portion 22 which is a continuation of the front wall portion 21 and, in the situation shown in Figure 1, is rolled-up; the rolled-up front wall portion 22 bears on the upper side of the cover plates of the feeding device 4. Measured in the vertical direction, the length of the rolled-up front wall portion 22 is such that, in unrolled state, its lower edge extends to at least the foremost edge of the floor plate 15.

The feeding aperture 13, which in Figure 1 fits the rearward end of the feeding channel 11 of the feeding device 4, extends in height approximately to the upper cover plates of the feeding device 4, said cover plates extending in horizontal direction to the front ends of the longitudinal ribs 18. The feeding aperture 13 as a whole can be closed substantially airtight by the downwardly unrolled front wall portion 22, as will be shown hereinafter.

The loading space 5 also has a rear wall 23 which is made of the same flexible material as the side wall portions 19, front wall 21 and roof wall 20. In Figure 1 the rear wall 23 is shown in its almost fully rolled-up state (reference numeral 24), as the major portion of the rear wall of the loading space 5 in the arrangement shown herein is covered by the front side of the dosing device 6. When the roll 24 is rolled down, the bottom side of the rear wall extends at least to the floor plate 15 and can then connect in an airtight manner to the side wall portions 19 and the metal bottom shell 15, 16. This also applies to the front wall 21. This airtight or substantially airtight connection of the movable flexible wall portions is effected, for example, by Velcro connections.

Consequently, the loading space 5 can basically constitute a completely closed, substantially airtight boundary of the space enclosed by this boundary. Said flexible wall portions are supported by a frame connected to the metal bottom shell and determining the three-dimensional shape of the flexible wall portions, while maintaining same during loading.

Within this boundary, more specifically at a short distance above the floor plate 15, there is disposed a known per se conveyor or roller bottom 25 which, if the loading space 5 is positioned on the frame 1 of the wagon, is drivable in a known per se manner from the power take-off shaft of the tractor via a detachable coupling. The end rollers and intermediate rollers, if any, of the longitudinal chains of the roller bottom 25 are bearing-supported in the side wall portions 16.

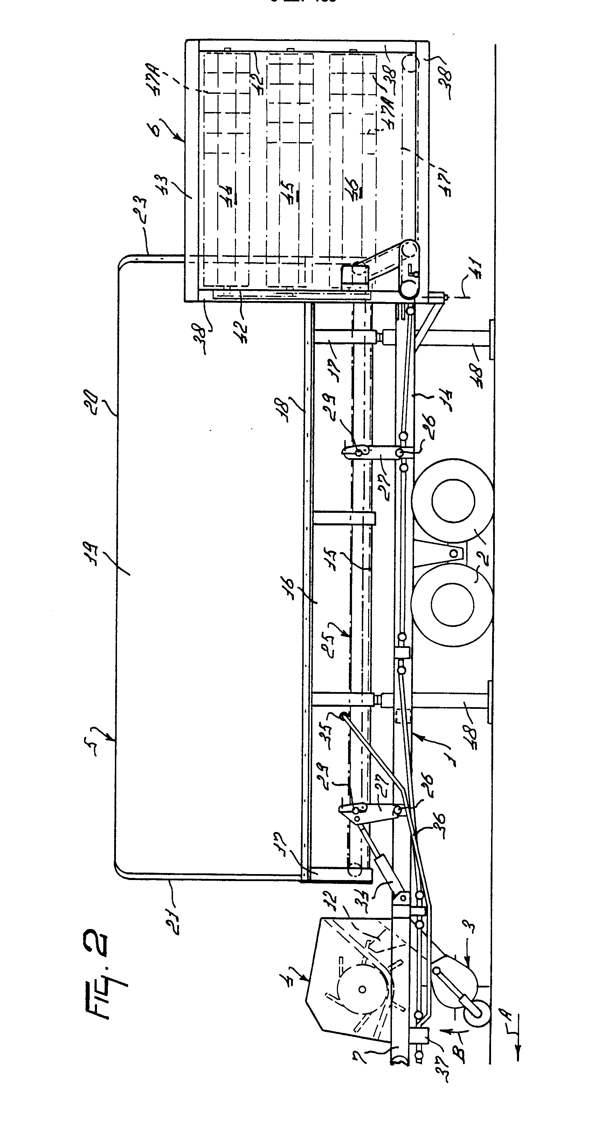

The loading space 5 is disposed, bodily exchangeable, on the rest of the loading wagon. To that end, each of the two carrier beams 14 of the frame 1 are provided with two interspaced pins 26 which extend transverse to the direction of operative travel A (Figures 1 to 3). A lever 27 is pivotal about each of the pins 26 from a forward and slightly obliquely upwardly directed position (Figure 1) to an approximately vertical position (Figures 2 and 3). Each lever 27 has a recessed portion 28 - (Figure 3), within which can be accommodated a pin 29 which is connected to the metal bottom shell 15, 16 of the loading space 5 and extends parallel to the associated pin 26. When a pin 29 bears in the recessed portion 28 of the lever 27, the pin 29 can be locked in the lever 27 by means of a latch 30 (Figure 3). In closed condition, the latch 30 can be locked relative to the lever 27 by means of a latching pin 31 which can be passed through a hole 32 provided in the end of the lever 27. Having been locked in this manner, the pin 29 is, however, still capable of pivoting in the lever 27. The frontmost levers 27 present at both sides of the loading space 5 also support a pivot shaft 33, about which is arranged pivotally the end of a piston rod of a hydraulic cylinder 34. The other, frontmost end of the hydraulic cylinder 34 is pivotal about a pivot shaft 34A which is bearing-supported in the nearby carrier beam 14 and arranged near the rear side of the feeding device 4 (Figure 3).

A valve 35 (Figure 1, 2) is provided in one of the side wall portions 16 of the metal bottom shell of the loading space 5, which valve is arranged such that it allows air to be sucked from the loading space 5 to the space thereoutside, but prevents air from entering into same. On the valve portion projecting from the relevant side wall portion 16 there is detachably disposed a flexible vacuum tube 36, which tube is coupled to a vacuum pump 37 mounted on one of the carrier beams 7. By means of an intermediate shaft coupled to the power take-off shaft of the tractor 10 the vacuum pump 37 is drivable from the tractor.

The dosing device 6, which is connectable to the rear wall of the loading space 5, is attached only to the frame 1 of the self-loading wagon. For that purpose, only at one vertical side of a framework 38 constituting part of a frame of the dosing device 6 there are provided two hinges arranged above one another and comprising hinge pins 39 and 40 (Figure 1), which hinge pins constitute a pivotal axis 41, about which the dosing device 6 as a whole is pivotable over at least approximately 90°. The position shown in Figure 1 corresponds to the operating position of the dosing device 6, said device being in an open connection with the loading space 5, whilst Figure 2 shows the position of the dosing device 6 wherein it has been pivoted over 90° about the pivotal axis 41. In its operative position, the dosing device 6 is temporarily connected to that side of the frame 1 which is remote from the hinge pins 39, 40 by quick-release means.

The two hinge pins 39 and 40 are detachable, so that the dosing device 6 can be removed bodily. In the pivoted position of the dosing device 6 shown in Figure 2, the device then being completely located at one lateral side of the loading space 5, the rear side of the loading space 5 has been fully uncovered, so that the flexible material rear wall 23, which hitherto was in rolled-up condition above the dosing device 6 (Figure 1), can now be fully unrolled downwardly and at all its edges be connected in a substantially airtight manner to the side walls 19 and the floor plate 15 of the loading space.

The dosing device 6 has side walls 42 in the form of plates (Figure 1) which, seen in Figure 1, are connected at their frontmost bounds to the framework 38. The top and rear bounds of the side walls 42 are interconnected by means of a cover plate 43. Three dosing rollers 44, 45 and 46, which are located straight above each other, are bearing-supported in the metal side walls 42 and, in the position shown in Figure 1, extend over the entire width of the loading space 5. The dosing rollers 44, 45 and 46 are each provided with a large number of projections 47A for picking-up, pulling apart and distributing crop fed from the loading space 5. In a manner known per se, the dosing rollers 44 to 46 are drivable in the direction indicated by the arrows C (Figure 1) via drive shafts arranged on the loading wagon frame. The configuration of the dosing rollers is such that the lower side of the bottommost roller is approximately in the region of the upper side of the conveyor roller bottom 25.

In the position of the dosing device 6 shown in Figure 1, there is disposed spaced below the lower roller 46 a cross-conveyor 47 which forms part of the dosing device 6. The cross-conveyor 47 can convey the crop, which has been processed and pulled apart by the dosing rollers 44 to 46 and, guided by the cover plate 43, drops down on the cross-conveyor 47, in a direction transverse to the direction of operative travel A. The sides of the dosing device 6 are open in the region between the lowermost roller 46 and the cross-conveyor 47, so that, optionally, the crop supplied on the cross-conveyor 47 can be uniformly dosed at one side of the dosing device 6 or at the other, and be deposited on the soil. To that end, the cross-conveyor 47 is drivable in two opposite directions transverse to the direction of operative travel A. The drive of the cross-conveyor 47 is also effected with the aid of the drive shafts provided on the wagon frame and which are drivable by means of the tractor 10 while using an interposed change-over mechanism for setting the two directions of rotation of the conveyor.

During the crop harvesting season, mown crop lying on the soil, in particular green forage, is picked-up by the combination of the self-loading wagon described hereinbefore and the tractor 10, travelling in the direction A (Figure 1). Optionally, the dosing device 6 may also be present, but this is not necessary, in which latter case the dosing device 6 is removed from the rest of the loading wagon by detaching the hinge pins 39 and 40 and the rolled-up rear wall portion 24 is rolled down and connected at its edges in a substantially airtight manner to the side wall portions 19 and to the floor 15 of the loading space 5.

During travel of the combination in the direction A, green forage is picked-up by the pick-up member 3 in the direction B and fed into the feeding channel 11. In a manner known per se, this green forage is stowed by means of the feeding device 4 from the feeding channel 11 through the feeding aperture 13 into the loading space 5, the green forage being delivered onto the upper side of the conveyor or roller bottom 25. During this green forage picking-up operation, the loading space 5 is filled in the customary manner, the conveyor roller bottom 25 being actuated at different instants from the driver's seat so as to achieve a uniform and compact distribution of the crop in the loading space 5, until the said loading space has been filled to capacity completely or almost completely.

Thereafter the loading space 5 is driven to a storage area near the farm buildings. In this area the two hydraulic cylinders 34, supplied by the hydraulic system of the tractor, are made operative from the driver's seat of the tractor, whereby the two levers 27 arranged on both sides of the loading space move in a direction towards the approximately vertical position shown in Figure 3. The loading space 5 then moves as a part of the parallelogram construction 5, 27, 14, 27 in a rearward and upward direction relative to the feeding device 4 and the frame 1. If during loading of the loading wagon the dosing device 6 is present, the dosing device 6 is moved about the pivotal axis 41 over 90° to the position shown in Figure 2, before the hydraulic cylinders 34 are energized, so that the rear wall of the loading space 5 can move unimpededly to the rear with respect to the frame 1.

As the front wall 21 of the loading space 5 is now free from the rear side of the feeding device 4, the rolled-up front wall portion 21 (reference numeral 22) can be rolled down and the edges thereof can be connected in a substantially airtight manner with respect to the side wall portions 16 and the floor 15, so that now the feeding aperture 13 of the loading space 5 can be closed. Closing the feeding aperture 13 may, however, alternatively be effected at a later stage. Should the dosing device 6 be present, the rolled-up rear wall portion 24 can also, as mentioned in the foregoing, be rolled down and be connected in a substantially airtight manner to the side wall portions 19, to the side wall portions 16 and to the floor 15. When the dosing device 6 is not present during loading of the wagon, the rear wall portion 24 can already be closed before loading.

In the described position wherein the loading space may already have been closed completely, supports 48 are positioned under the loading space 5 in the region of two of the ribs 17, which supports are arranged between the carrier beams 14 of the frame 1 (Fig. 2). At their upper sides, the supports 48 are optionally provided with jacks 49 for compensating for differences in height due to an uneven soil; in this position, the supports 48 can directly bear the loading space 5 against the soil. Two pairs of interspaced supports 48 may be provided.

Then, by detaching the locking pins 31 (Figure 3) the latches 30 can be released, whereafter, by energizing the two hydraulic cylinders 34, the driver can cause the levers 27 to pivot again towards the position shown in Figure 1. Consequently, after this pivoting action the filled loading space 5 fully bears on the supports 48. Then the driver can drive away the rest of the loading wagon in the direction A, since the frame 1 is open at its rear side. The dosing device 6, if present, does in this situation not constitute an obstacle, if, as shown in Figure 2, it is pivoted along a lateral side of the loading space; since the dosing device 6 is only connected to one of the carrier beams 14 of the frame 1, the dosing device 6 moves, when the rest of the loading wagon is driven away, along a side of the loading space 5.

Consequently, the loading space 5 remains stationary, supported by the supports 48. As the loading space is sealed, ensilage of the green forage contained in the loading space 5 will occur during the subsequent period of time. In this parked position, the loading space 5 functions as a silo.

Now, in an analogous manner, though in reverse order, a further loading space which is identical or substantially identical to the one described in the foregoing is positioned on the frame 1. This second loading space, supported by supports 48, passes during backing up of the frame 1 the rearmost open side thereof until the levers 27 which, in the meantime, are pivoted upwards again from the driver's seat, have arrived near the pins 29 of this second loading space. After locking of the second loading space relative to the frame 1 by means of closing the latches 30 and locking by means of the pin 31, retraction of the piston rods of the cylinders 34 renders it possible to position the loading space on the frame 1. In this situation, the front wall portion 22 should be in its rolled-up condition (as shown in Figure 1) to enable the feeding aperture 13 to connect up with the feeding channel 11. Thereafter, the above-described operations can be repeated. After the second loading space has been positioned again on supports 48 in the storage area, the same procedures can be effected for a third loading space, etc. The green forage stock is then stored in a plurality of substantially airtight loading spaces, in which silage of the green forage takes place.

Before a self-loading wagon frame of a loading space bearing on supports 48 is removed, the vacuum pump 37 is actuated from the driver's seat, causing the air to be sucked from the loading space via the vacuum tube 36 and the valve 35, as a result of which the flexible wall portions 19, 20, 21, 23 then come into close contact with the green forage contained in the loading space. Since in this manner oxygen has been removed from the loading space as much as possible, an appropriate climate for ensilaging of the green forage has been created. Before the frame 1 is moved away, the vacuum tube 36 is of course removed from the valve 35. Should it be desirable to repeat removal of air from the parked loading space during the preservation period, a stationary vacuum pump installed near the parked loading spaces can be used, which pump optionally can be connected to the valves 35 of the parked loading spaces at predetermined intervals.

If during the winter period ensilaged green forage is to be used for stall feeding, one of the loading spaces in the storage area is coupled to the frame 1 in the manner described in the foregoing, the loading space again bearing on the carrier beams 14. The front side of the loading space is then again contiguous to the rear side of the feeding device 4 in the region of the feeding aperture 13. In this case the dosing device 6 is arranged by means of the pins 39 and 40 and pivoted to the position shown in Figure 1, the major portion of the rear wall 23 being in the rolled-up state above the top side of the dosing device.

Thereafter, the assembly is driven into the stable and the dosing device is made operative from the driver's seat and then cooperates with the likewise operative roller bottom 25, which feeds the crop to the dosing device 6 in a rearward direction. The rotating rollers 44 to 46 pull the ensilaged crop apart and distribute same uniformly over the upper side of the cross-conveyor 47 which, depending on the requirements, deposit the fodder at either one or the other side of the loading wagon in front of the cattle. Consequently, the preserved green forage is fed directly to the cattle in the preserved state from the loading space wherein it was stored immediately after having been picked-up from the field.

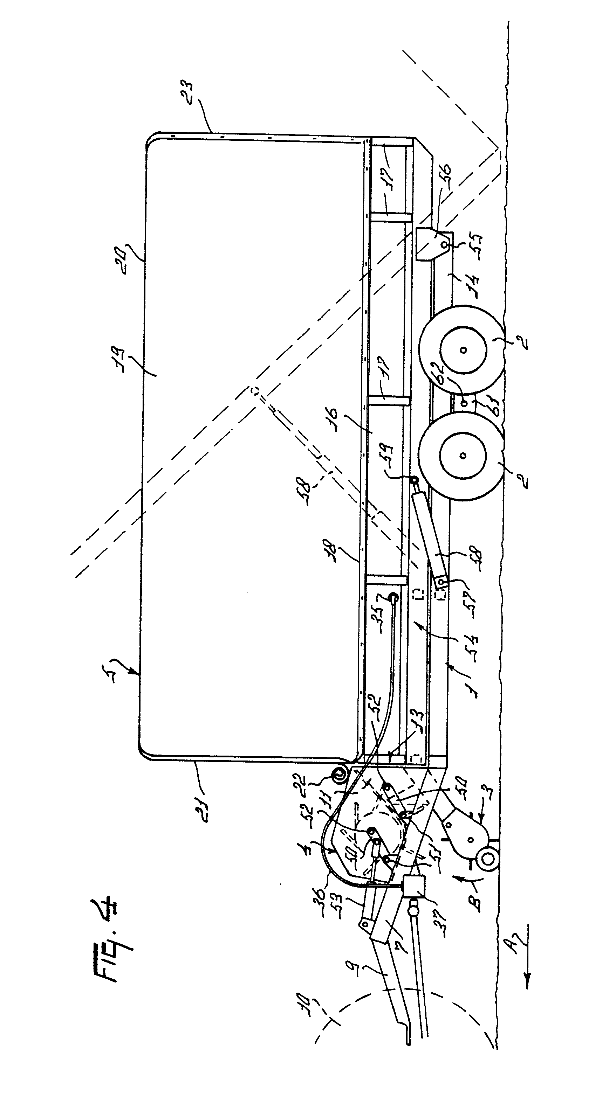

Figures 4 to 8 show a second embodiment of the invention. The constructional parts that correspond to those of the first embodiment are indicated by the same reference numerals.

The frame 1 again includes two carrier beams 14 which at their front side are interconnected by means of a cross-beam. Together with the two carrier beams 14, this cross-beam forms a U-shaped frame which is open to the rear. The two carrier beams 7 rigidly connected to the front ends of the beams 14 and carrying the feeding device and the pick-up member 3 are, in a side view as shown in Figure 4, directed upwardly at an angle of approximately 20° from the front ends of the beams 14. Compared with the first embodiment, there are the following differences.

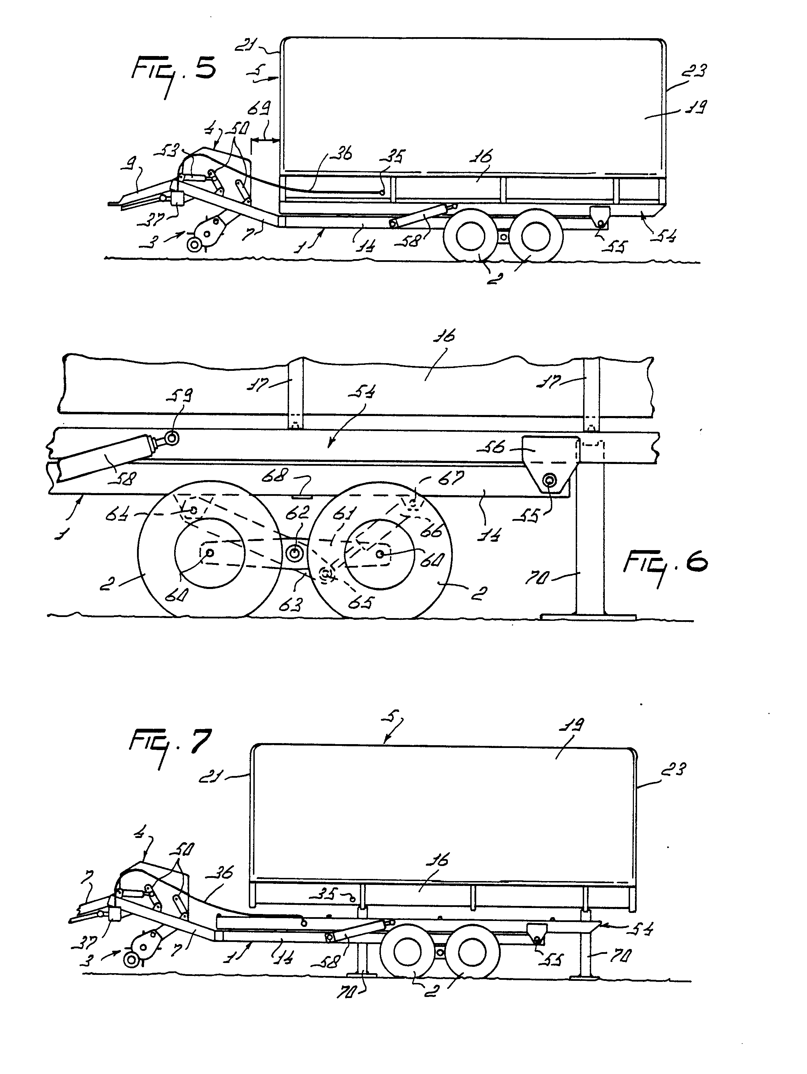

The feeding device 4 and the pick-up member 3 form an integral unit and are supported only by the carrier beam 7. This unit bears on two pivotal arms 50 provided at each side thereof. The pivotal arms 50 are arranged in spaced relationship behind each other and are connected, capable of pivoting about pivotal shafts 51 which are spaced apart one behind the other and are directed transverse to the direction of operative travel A, to the upper side of the carrier beam 7 located at the relevant side. From the pivotal shafts 51, the pivotal arms 50 extend upwardly and, taken in the direction of operative travel A, in the operative position of the unit in a rearward direction. The two pairs of pivotal arms 50 are of the same length and at their ends, remote from the pivotal shafts 51, are provided with hinge pins 52, which carry a separate frame of the feeding device/pick-up member unit. Said latter rigid frame forms, together with the pivotal arms 50 and the carrier beams 7, seen in side view as shown in Figure 4, a parallelogram construction. The frontmost pivotal arms 50 are connected pivotally to the front ends of the relevant carrier beams 7 by means of hydraulic cylinders 53. By operating the hydraulic cylinders 53 from the driver's seat of the tractor 10, the unit of pick-up member 3 and feeding device 4 (plating included) can be pivoted in the forward direction relative to the carrier beams 7, and hence relative to the frame 1 and also relative to the loading space 5, to an inoperative position which is shown in Figures 5 and 7. Because of the movement in the upward direction of the carrier beams 7, not only the unit of feeding device 4 and pick-up member 3 moves in the forward direction, but the pick-up member 3 moves also in an upward direction relative to the soil.

In this embodiment, the loading space 5 is not movable in the horizontal direction relative to the frame 1, this in contradistinction to the first embodiment.

A further difference, compared with the first embodiment, is the fact that in the present embodiment the loading space 5 is not provided with a conveyor or roller bottom, whilst a dosing device has not been included either.

A still further difference is the fact that in the present embodiment, during the pick-up operation, the loading space 5 bears on an auxiliary frame 54 which is approximately identical to the frame 1 and, consequently, also has a U-shape that is open to the rear.

However, the auxiliary frame 54 is approximately 15% longer than the frame 1 and extends over a corresponding distance from the rear side of frame 1. In the arrangement shown in Figure 4, the auxiliary frame 54 bears over nearly its overall length on the frame 1. In this embodiment, a hinging connection comprising a set of pivotal shafts 55 arranged near the rearmost ends of the two carrier beams 14 is disposed near the rear side of frame 1. The pivotal shafts 55 are directed transverse to the direction of operative travel A. Lugs 56 which are rigidly connected to the carrier beams of the auxiliary frame 54, located above the beams 14, are capable of pivoting about the pivotal shafts 55. Together with the loading space 5 disposed thereon, the auxiliary frame 54 can pivot relative to the frame 1 about the pivotal shafts 55 (see the broken-line position in Figure 4). In order to enable such a pivotal movement, each carrier beam 14 is provided, at some distance before the pivotal shafts 55, in a position which -taken in the direction of operative travel A -is located before the ground wheels 2, with pivotal shafts 57 about which, at each side of the wagon, is pivotal a hydraulic cylinder 58 which extends rearwardly and obliquely upwardly from the associated pivotal shaft 57. These two hydraulic cylinders 58 are in the form of telescopically sliding hydraulic cylinders. The end of the piston rod of each cylinder 58 is pivotal about a pivotal shaft 59, which is directed parallel to the associated pivotal shafts 57 and is rigidly connected to the side of the carrier beam of the auxiliary frame 54. When the hydraulic cylinders 58 are energized from the driver's seat, the assembly of auxiliary frame 54 and superposed loading space 5 pivots about the pivotal shafts 55 to the position which is illustrated in Figure 4 by means of broken lines and is intended for discharging ensilaged green forage from the loading space 5.

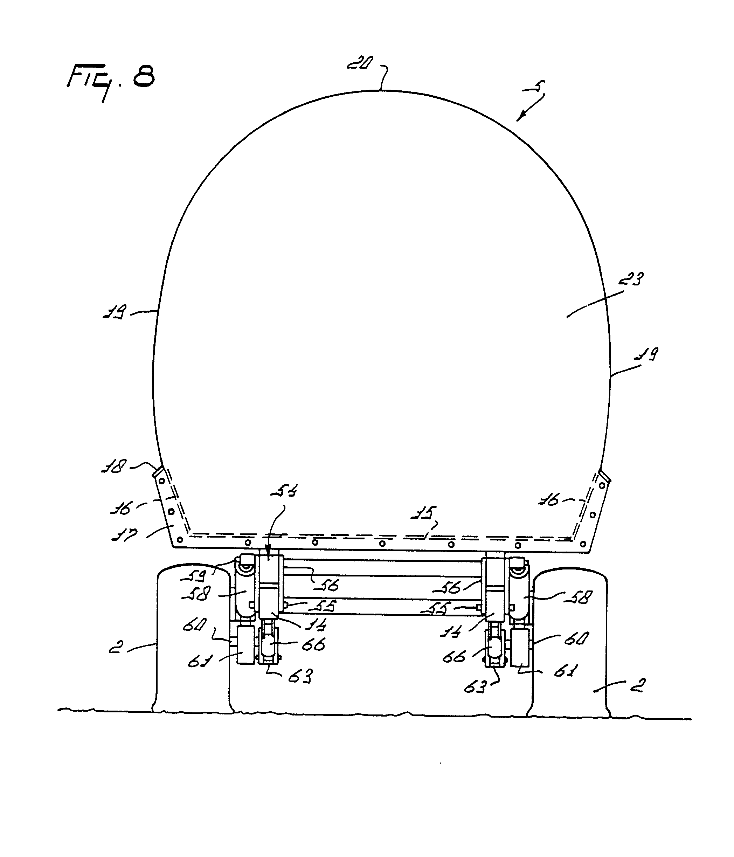

The two ground wheels, which are located on either side of the frame 1 and -taken in the direction of operative travel A -are arranged one behind the other, have wheel axles 60 which are intercoupled by means of a carrier member 61 which is substantially contiguous to the vertical inner plane of the ground wheels (Figures 6 and 8). The carrier member 61 has a hinge pin 62 positioned halfway between the wheel axles 60, about which pin an arm 63 is pivotal which -taken in the vertical direction -is located approximately straight under the carrier beam 14 of the frame 1. At one of its ends, the arm 63 is provided pivotally about a pivotal shaft 64 which, in the region of the bottom side of the carrier beam 14, is connected to said carrier beam and is directed parallel to the wheel axles 60. Seen in a direction away from the pivotal shaft 64, the arm 63 extends over some length to beyond the hinge pin 62 and, near that end, is provided with a pivotal shaft 65 about which the piston rod of a hydraulic cylinder 66 is capable of pivoting. The other end of the hydraulic cylinder 66 is capable of pivoting about a pivotal shaft 67, which is connected to the carrier beam 14 and is also directed parallel to the wheel axles 60. Taken in the direction of operative travel A -the pivotal shaft 64, in a plan view, is located before the wheel axle 60 of the front wheel and the pivotal shaft 67 is located behind the wheel axle 60 of the rear wheel. By simultaneously operating both hydraulic cylinders 66 from the driver's seat of the tractor, the hinge pin 62 can be moved up and down relative to the frame 1, as a result of which the same motion is imparted to wheel axles 60, which bear on the ground. In the loading wagon position appropriate for picking-up the crop (Figure 4), the piston rod of the cylinder 66 is in the downstroke position and the centre portion of each of both carrier members 61 bears by means of its upper side against a stop 68 mounted against the bottom side of the carrier beam 14. The construction shown in Figure 6 is arranged on both sides of the wagon.

During the crop harvesting season, the self-loading wagon in accordance with the invention is used in the position shown in Figure 4. In this situation, the frame of the unit formed by the pick-up member 3 and the feeding device 4 is pivoted to its rearmost position -taken in the direction of operative travel A -by means of the hydraulic cylinders 53 and the pair of arms 50, the feeding channel 11 enclosed by this unit being contiguous to the feeding aperture 13 of the loading space 5. Then, the lower front wall portion bears in the rolled-up state (reference numeral 22) on the plating of a feeding device 4. In this position of the loading wagon, the green forage is conveyed in the direction B by the pick-up member 3, moved into the range of reach of the feeding device 4 and rammed into the loading space 5 via the feeding channel 11 and the feeding aperture 13. The pick-up operation is continued until the loading space has been filled wholly or substantially wholly to capacity and in a compact manner.

Thereafter the loading wagon is driven to the storage area and placed in a predetermined position. By energizing the hydraulic cylinder 53 from the driver's seat on the tractor, the pivotal arms 50 whose upper ends are coupled together by the frame of the pick-up member 3 and feeding device 4 unit are pivoted forwardly, together with said unit, relative to the frame 1 and also relative to the loading space 5 to the position shown in Figure 5, whereby the pivotal arms 50 -taken in a direction away from their pivotal shafts 51 -point obliquely forwardly and upwardly. Thus, a space denoted by reference numeral 69 in Figure 5 is created between the front wall of the loading space 5 and the rear side of the feeding device. In this manner it is possible to lower the rolled-up front wall portion 22 and to connect same in an airtight or substantially airtight manner to the side wall portions 19 and to the floor 15 of the loading space, the feeding aperture 13 being covered thereby. At the same time, by energizing the two hydraulic cylinders 66 -(Figure 6), the carrier member 61 and hence the wheel axles 60 of the ground wheels 2 are lowered relative to the frame 1. This position can be maintained by hydraulically locking the cylinders 66. This relative motion of the ground wheels 2 has increased the spacing between the lower side of the loading space 5 and the ground. Subsequently, supports 70 are placed on each side under the loading space 5 in the region of two ribs 17 (Figures 6 and 7); these supports are provided at the inner sides of the carrier beams 14 of the frame 1 and the carrier beams of the auxiliary frame 54. Thereafter, the hydraulic cylinders 66 are energized from the driver's seat in such a manner that the piston rods thereof are moved into the cylinders, so that the frame 1 and the auxiliary frame 54 bearing thereon together move downwardly again towards the ground until the carrier members 61 again bear against the associated stops 68. The loading space 5 now fully bears on the four supports 70.

By using the vacuum pump 37, which can be operated from the tractor, the flexible tube 36 and the valve 35 air is exhausted from the loading space 5, so that the flexible walls are as contiguous as possible to the green forage because of the overpressure of the atmosphere. This air exhausting operation may, of course, alternatively be effected during the drive to the storage area; the only condition to be satisfied then being that the feeding aperture 13 is sealed by the front wall portion 22 in an airtight manner.

If, relative to the frame, the wheels 2 are again in their normal positions, the carrier members 61 bearing against the stops 68, the loading space fully bears on four supports 70. The rest of the self-loading wagon can now be driven away in the direction A, so that the loading space 5 stays behind in the storage area. Thereafter, depending on the needs, one or successively more loading spaces 5 are loaded on the auxiliary frame 54 in the arrangement shown in Figure 4. These loading spaces are of a construction identical to that of the first loading space.

During the winter season one of the loading spaces in the storage area, filled with silaged forage, is loaded on the auxiliary frame 54 in the same manner as before the start of the picking-up of the green forage from the field. For that purpose the frame 1 and also the auxiliary frame 54 are driven, in a direction opposite to the direction A, to under the loading space 5 and around the supports 70 until the loading space 5 is completely over the auxiliary frame 54. In this connection it may be advantageous to remove the unit of pick-up member 3 and feeding device 4 forwards by energizing the hydraulic cylinders 53 in order to render it possible for the loading space to be positioned on the auxiliary frame in a less critical manner. Subsequently, the loading wagon is driven into the cattle stable. The rear wall 23, which was closed during the above-described procedure, is now detached from the floor plate 15, the side wall portion 16 and the flexible side wall portions 19 and rolled-up and temporarily secured. When now the loading wagon is driven past the cattle, the two hydraulic cylinders 58 being uniformly energized by the tractor driver, the auxiliary frame 54 together with the loading space 5 secured thereto gradually tips about the two pivotal shafts 55 to the position indicated in Figure 4 by means of broken lines, causing the ensilaged crop to slide from the loading space 5 and to be deposited in front of the cattle.

It should be noted that the feeding device 4 and picking-up member 3 unit, which is movable relative to the frame 1 and the loading space 5, is not absolutely indispensable for performing the procedure, as the feeding aperture after picking-up of the fresh green forage can also be sealed by the front wall portion 22 when the loading space bears on the supports 70 (Figure 7). However, this movable unit indeed facilitates the procedure.

The invention can be summarized as follows. By producing an underpressure in the loading space, the green forage picked-up from the field by the self-loading wagon is compacted in the loading space by the overpressure of the atmosphere. This improves both the efficiency of transportation and the efficacy of the preserving action. When the loading space has been filled to capacity, it can be removed from the loading wagon frame, preferably near the farm buildings, for example, by raising the loading space and providing one or more supports thereunder. Then an empty loading space can be coupled to the loading wagon frame and also be loaded on the field.

During the winter season, a full loading space can be coupled to the loading wagon frame. In case the loading wagon has been provided with a dosing device, the green forage can be discharged directly, laterally from the wagon. Optionally, a part of the fodder can daily be delivered from the wagon. This procedure may be repeated with other loading spaces filled with silaged green forage. The crop processing member according to the invention is particularly suitable for green forage crops. The substantially airtight seal of the loading space promotes advantageous preservation of the crop. The crop processing system in accordance with the invention is advantageous in that time-consuming operations using the silage cutter and the associated additional transportation can be omitted.

Furthermore, crop binding material, as required in baling etc, which material may be harmful to the animals, is superfluous.

In addition, one person with a tractor can process large quantities of crop effortless and in a short period of time. The labour productivity is high.

In the field, the dosing device need not be installed on the self-loading wagon.

## Claims

1. A self-loading wagon comprising a pick-up member (3) and at least one feeding device (4), as well as a loading space (5), characterized in that the self-loading wagon is of such a structure that the crop can be ensilaged in the loading space (5).

2. A self-loading wagon as claimed in claim 1, characterized in that the loading space (5) can be closed in a substantially airtight manner.

3. A self-loading wagon as claimed in claim 1 or 2, characterized in that the loading space (5) has a metal floor (15) and at least partly flexible walls (19, 20, 21, 23).

4. A self-loading wagon as claimed in claim 3, characterized in that the side walls (19), the front and rear walls (21, 23) and upper wall (20) of the loading space (5) are at least partly flexible and of an airtight construction.

5. A self-loading wagon as claimed in any one of the preceding claims, characterized in that one or more bounding walls (19, 20, 21, 23) of the loading space are at least partly removable.

6. A self-loading wagon as claimed in any one of the preceding claims, characterized in that the loading space (5) has a coverable feeding aperture (13).

7. A self-loading wagon as claimed in any one of the preceding claims, characterized in that means are provided with which a reduced air pressure can be produced in the loading space (5).

8. A self-loading wagon as claimed in claim 7, characterized in that a wall (16) of the loading space (5) has an aperture (35) for exhausting air from said loading space (5), a vacuum pump (37) being connectable to said aperture.

9. A self-loading wagon as claimed in claim 8, characterized in that the vacuum pump (37) is placed on the loading wagon and is drivable from the power take-off shaft of a tractor.

10. A self-loading wagon as claimed in any one of the preceding claims, characterized in that the loading space (5) is exchangeably connected to a frame (1) of the loading wagon.

11. A self-loading wagon as claimed in any one of the preceding claims, characterized in that a dosing device (6) is connectable to the loading wagon, so as to cooperate with a conveyor roller bottom (25) comprised by the loading space (5).

12. A self-loading wagon as claimed in claim 11, characterized in that the conveyor roller bottom (25) is drivable from the power take-off shaft of a tractor which moves the wagon.

13. A self-loading wagon as claimed in claim 11 or 12, characterized in that the dosing device - (6) is pivotally connected in such a manner that another loading space (5) can be positioned on the frame (1) of the loading wagon without being impeded by the dosing device (6).

14. A self-loading wagon as claimed in claim 13, characterized in that the dosing device (6) can be coupled to and detached from the frame (1) of the loading wagon and/or is, relative to said loading wagon frame (1), capable of pivoting about an upwardly directed axis (41) over at least approximately 90°.

15. A self-loading wagon as claimed in any one of the preceding claims, characterized in that the loading space (5) and the dosing device (6) can be detached from the loading wagon frame (1) individually.

16. A self-loading wagon as claimed in any one of the preceding claims, characterized in that the loading space (5) is detachable and can be tipped hydraulically.

17. A self-loading wagon as claimed in any one of the preceding claims, characterized in that the loading space (5) can be moved relative to the feeding device (4).

18. A self-loading wagon as claimed in claim 17, characterized in that the loading space (5) can be moved in a substantially horizontal direction relative to the loading wagon frame (1) and the feeding device (4) is mounted rigidly, as an integral whole, relative to the frame (1).

19. A self-loading wagon as claimed in any one of the claims 1 to 17, characterized in that the feeding device (4) is movable in a substantially horizontal direction relative to the loading space - (5) and the frame (1).

20. A self-loading wagon as claimed in any one of the preceding claims, characterized in that the loading space (5) can be moved upwardly relative to the frame and can bear on the ground, independently of the frame, by support means (48).

21. A method of ensilaging crop picked up from the field by means of a self-loading wagon and feeding same to the cattle, characterized in that the crop stored in the loading space (5) of the self-loading wagon remains therein for the purpose of ensilaging, and that the ensilaged fodder is offered directly to the cattle therefrom.

Fig. 1

FIG. 2

FIG. 3

FIG. 4

0 227 188

FIG. 5

FIG. 6

FIG. 7

FIG. 8

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | GB-A-2 010 216 (X. LIPP)<br><br>* claim 1.3 * | 1,2,5,<br>10,16,<br>17,20,<br>21 | A 01 F 25/14<br>A 01 D 90/00 |
| Y |  | 3,4,6-<br>8,11,<br>12 |  |
| X | FR-A-2 502 889 (P. DUMONT)<br><br>* figure 1; claims 1-3 * | 1,10,<br>16,17,<br>20,21 |  |
| Y |  | 3-8,11<br>,12 | TECHNICAL FIELDS SEARCHED (Int. Cl.4) |
| X | DE-A-2 005 218 (P. SCHMID)<br>* figure 1; claims 1-4 * | 1,2,21 | A 01 F 25/00<br>A 01 D 90/00 |
| X | LU-A- 56 801 (J.W. FARNELL)<br>* claims 1, 5, 6, 8 * | 1,2,21 |  |
| Y | US-A-3 473 679 (E. WEICHEL)<br>* figures 3-5 * | 5 |  |
|  | --- -/- |  |  |

The present search report has been drawn up for all claims

| Place of search | Date of completion of the search | Examiner |
|---|---|---|
| BERLIN | 26-02-1987 | SAMWEL P.N. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| Y | AT-B- 255 978 (R. BONAZZI et al.) <br> * whole document * | 7 | |
| | --- | | |
| Y | US-A-1 454 345 (J.A. STOBIE) <br> * figure 1 * | 11,12 | |
| | ----- | | |

TECHNICAL FIELDS
SEARCHED (Int. Cl.4)

The present search report has been drawn up for all claims

| Place of search | Date of completion of the search | Examiner |
|---|---|---|
| BERLIN | 26-02-1987 | SAMWEL P.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82